# EUROPÄISCHE PATENTSCHRIFT

(11) **EP 1 364 742 B1**
(45) Veröffentlichungstag und Bekanntmachung des Hinweises auf die Patenterteilung: **11.11.2009**
(21) Anmeldenummer: 02011232.2
(22) Anmeldetag: 22.05.2002
(51) Int. Cl.: B23Q 3/155

(54) **Werkzeughandhabungsvorrichtung für eine Werkzeugmaschine**
Tool management system for machine tools
Système de gestion d'outils pour une machine-outil

(43) Veröffentlichungstag der Anmeldung: 26.11.2003
(73) Patentinhaber: Maschinenfabrik Berthold Hermle Aktiengesellschaft, D-78559 Gosheim (DE)
(72) Erfinder: Mattes, Anton, 78585 Bubsheim (DE); Wäschle, Timo, 78628 Rottweil (DE)
(74) Vertreter: Vetter, Hans

(56) Entgegenhaltungen:
- US-A- 4 087 901

## Beschreibung

Die Erfindung betrifft eine Werkzeughandhabungsvorrichtung für eine Werkzeugmaschine mit einer Vielzahl von in einer Ebene angeordneten Werkzeughaltern und einer Werkzeuggreiferanordnung zum Verfahren von Werkzeugen zwischen einer Übergabestation und den Werkzeughaltern.

Eine derartige Werkzeughandhabungsvorrichtung ist beispielsweise aus der DE-A-10020801 bekannt. Bei dieser bekannten Vorrichtung sind für das Handling bzw. das Verfahren der Werkzeuge drei Freiheitsgrade erforderlich, wodurch der Bewegungsmechanismus für die Werkzeuggreiferanordnung aufwendig und teuer wird. Darüber hinaus müssen lange Verfahrwege und dadurch ein relativ langsamer Werkzeugwechselvorgang in Kauf genommen werden. Schließlich erfordert die bekannte Vorrichtung bei sperriger Bauform eine große Aufstellfläche.

Aus der US-A-4 087 901 ist eine Anordnung von konzentrischen Werkzeughaltern bekannt, wobei eine schwenkbare und in radialer Richtung linear bewegbare Werkzeuggreiferanordnung jeweils radial nach außen an einen Werkzeughalter heran bewegt werden muss, um ein Werkzeug dort abzulegen oder ein abgelegtes Werkzeug dort aufzunehmen. Dies bedingt, dass einer der beiden konzentrischen Kreise nicht stationär sein darf, sondern kreisförmig bewegbar, da sonst der Greifer nicht an die Werkzeughalter des äußeren Ringes heranfahren können. Neben der aufwendigeren Mechanik sind dabei relativ lange Verfahrwege und entsprechend ein relativ langsamer Werkzeugwechselvorgang die Folge.

Weiterhin sind sogenannte Trommelmagazin- und Kettenwechsler bekannt, bei denen zur Übergabe des gewünschten Werkzeugs sämtliche im Magazin befindliche Werkzeuge samt Werkzeughaltern bewegt werden müssen. Durch die sehr große Masse der gesamten Anordnung sind nur relativ langsame Bewegungen bei aufwendiger Antriebstechnik möglich.

Eine Aufgabe der vorliegenden Erfindung besteht darin, eine Werkzeughandhabungsvorrichtung zu schaffen, die gegenüber bekannten Vorrichtungen bei einfacherem Bewegungsablauf mit nur zwei Freiheitsgraden durch kürzere Verfahrwege einen schnelleren Werkzeugwechsel ermöglicht.

Diese Aufgabe wird erfindungsgemäß durch eine Werkzeughandhabungsvorrichtung mit den Merkmalen des Anspruchs 1 gelöst.

Der Vorteil der erfindungsgemäßen Werkzeughandhabungsvorrichtung besteht insbesondere darin, dass die gesamte Werkzeugwechseloperation durch zwei NC-Achsen realisiert werden kann, nämlich durch die Kombination von einer translatorischen und einer rotatorischen Bewegung, durch die das Anfahren jedes Werkzeughalters bzw. jedes Werkzeugs mit großer Geschwindigkeit erfolgen kann. Durch die stationäre Speicherung der Werkzeuge kann das Handling sehr dynamisch agieren.

Durch die Anordnung der Werkzeug in Ringform erreicht man eine hohe Kompaktheit, da auf Grund der Geometrie auf einem Kreisbogen im Vergleich zu anderen Geometrien mehr Werkzeuge gespeichert werden können. Weiterhin sind sehr konstante Wechselzeiten realisierbar.

Die Werkzeuggreiferanordnung ist in vorteilhafter Weise in ihrer unbeladenen Offenstellung zum Überfahren von in den Werkzeughaltern gehaltenen Werkzeugen ausgebildet. Dies verkürzt die Verfahrwege und radial benachbarte Werkzeuge können sehr schnell erreicht werden. Dieser Vorteil wird noch dann verstärkt, wenn wenigstens ein Teil der Werkzeughalter jeweils in radialer Richtung fluchtend ausgebildet ist, da dann ein radiales Verfahren und Überfahren von Werkzeughaltern durch die Werkzeuggreiferanordnung ohne zusätzliche Schwenkbewegung möglich wird.

Die erfindungsgemäße Werkzeughandhabungsvorrichtung kann sowohl als Werkzeugmagazin oder als Magazinplatzerweiterung für ein Werkzeugmagazin einer Werkzeugmaschine eingesetzt werden. Dabei ist sowohl eine platzsparende Integration in der Werkzeugmaschine bzw. im Bearbeitüngszentrum möglich als auch eine Anordnung neben der Maschine, insbesondere im Falle des Einsatzes als Magazinplatzerweiterung. Durch den Einsatz als Magazinplatzerweiterung kann das Produktionsspektrum einer Einzelmaschine wesentlich erweitert werden. Es besteht beispielsweise infolge der großen Kapazität die Möglichkeit, sogenannte Schwesterwerkzeuge aufzunehmen, worunter man Werkzeuge mit gleichen Referenzen wie das Hauptwerkzeug versteht, die dann zum Einsatz kommen, wenn das Hauptwerkzeug beispielsweise durch eine Werkzeugbruch- oder Standzeitüberwachung von der Steuerung gesperrt wird.

Durch die in den Unteransprüchen aufgeführten Maßnahmen sind vorteilhafte Weiterbildungen und Verbesserungen der im Anspruch 1 angegebenen Werkzeughandhabungsvorrichtung möglich.

Die Bewegungsebene der Werkzeuggreiferanordnung ist in vorteilhafter Weise parallel zur Ebene der Werkzeughalter angeordnet, wobei jeweils der zu dieser Bewegungsebene hin gerichtete Haltebereich der in den Werkzeughaltern gehaltenen Werkzeuge bei entsprechender Positionierung der Werkzeuggreiferanordnung zwischen deren Greifbacken zu liegen kommt. Dies macht eine Bewegung parallel zur Schwenkachse des Auslegers entbehrlich.

In einer bevorzugten Ausgestaltung sind die Werkzeughalter in wenigstens einer Reihe, insbesondere in konzentrischen Ringen um die Schwenkachse herum angeordnet. Durch diese Anordnung erreicht man eine hohe Kompaktheit, da auf Grund der Geometrie auf einem Kreisbogen im Vergleich zu anderen Geometrien mehr Werkzeuge gespeichert werden können. Weiterhin sind sehr konstante Wechselseiten realisierbar. Selbstverständlich können prinzipiell auch andere Reihenanordnungen realisiert werden, beispielsweise lineare, vieleckige, ovale oder sonstige Anordnungen. Bei jeder Anordnung mit Ausnahme der konzentrischen Ringanordnung muss beim Anfahren der Werkzeughalter gleichzeitig eine Schwenk- und Hubbewegung des Auslegers durchgeführt werden.

Um auch die beladene Werkzeuggreiferanordnung radial verfahren zu können, wird zweckmäßigerweise wenigstens eine radiale Verfahrgasse freigelassen.

Zur ringförmigen Anordnung der Werkzeughalter eignen sich vor allem Halteringe, wobei innere Halteringe vorzugsweise beidseitig mit Werkzeughaltern versehen sind.

Am oder im Bereich des äußeren Halterings ist eine insbesondere manuelle Be- und Entladestation für Werkzeuge vorgesehen, die in einer zweckmäßigen Ausgestaltung so ausgebildet ist, dass in ihrem Bereich an der radial nach außen weisenden Seite des äußeren Halterings mehrere Werkzeughalter und vorzugsweise eine wenigstens den äußeren Haltering durchquerende Verfahrgasse angeordnet sind. Hierdurch können diese äußeren Werkzeughalter manuell bestückt oder nicht mehr benutzte Werkzeuge entnommen werden, wobei durch die zugeordnete Verfahrgasse schnelle Bewegungen und kurze Verfahrwege der Werkzeuggreiferanordnung gewährleistet sind.

Der radiale Abstand der Halteringe ist zweckmäßigerweise so bemessen, dass eine Schwenkbewegung der beladenen Werkzeuggreiferanordnung dazwischen möglich ist.

In einer zweckmäßigen Ausgestaltung ist der Ausleger teleskopartig in seiner Länge veränderbar. Alternativ hierzu könnte auch die Werkzeuggreiferanordnung verschiebbar an einem starren Ausleger angebracht sein.

Die Greifbewegung der Greifbacken der Werkzeuggreiferanordnung und/oder die Radialbewegung der Werkzeuggreiferanordnung erfolgt vorzugsweise pneumatisch, hydraulisch oder elektrisch mit entsprechenden Aktoren, beispielsweise Stellmotoren bzw. Stellzylindern.

Um Operationen mit endlosen Drehbewegungen des Auslegers zu ermöglichen, ist in vorteilhafter Weise eine Schleifringanordnung zur Übertragung von elektrischen Signalen und/oder von elektrischer Versorgungsenergie auf den Ausleger vorgesehen.

Die Werkzeuggreiferanordnung besitzt in einer einfachen Ausführung ein Greifbackenpaar, wobei auch zwei. Greifbackenpaare (Doppelgreifer) vorgesehen sein können, um einen noch schnelleren Werkzeugwechsel realisieren zu können. Das Ablegen des gebrauchten Werkzeugs und das Bereitstellen eines neuen Werkzeugs kann dann hauptzeitparallel erfolgen.

Ein Ausführungsbeispiel der Erfindung ist in der Zeichnung dargestellt und in der nachfolgenden Beschreibung näher erläutert. Es zeigen:
- Fig. 1: eine Werkzeughandhabungsvorrichtung mit drei konzentrischen Halteringen für Werkzeughalter in der Draufsicht,

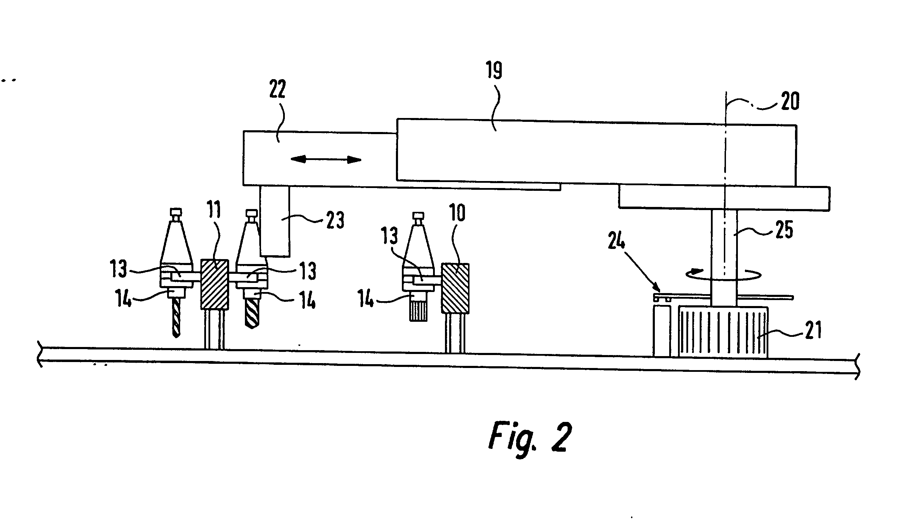

- Fig. 2: eine Seitenansicht der Werkzeughandhabungsvorrichtung im Bereich des Auslegers und
- Fig. 3: eine Seitenansicht eines Werkzeuggreifers mit zwei Greifbacken.

Die in den Figuren als Ausführungsbeispiel dargestellte Werkzeughandhabungsvorrichtung kann als Werkzeugmagazin für eine Werkzeugmaschine dienen bzw. ausgebildet sein, und zwar als integriertes Werkzeugmagazin oder in nicht integrierter Ausführung. Eine andere Anwendung ist die als Magazinplatzerweiterung, das heißt, die Werkzeughandhabungsvorrichtung wird einem bestehenden Werkzeugmagazin zugeordnet, wobei die Werkzeuge dann zwischen dem bestehenden Werkzeugmagazin und der Magazinplatzerweiterung ausgetauscht werden. Durch eine derartige Magazinplatzerweiterung kann das Produktionsspektrum einer Werkzeugmaschine, beispielsweise eines Bearbeitungszentrums, wesentlich erweitert werden. Die Magazinplatzerweiterung kann dann neben zusätzlichen Werkzeugen auch sogenannte Schwesterwerkzeuge aufnehmen, also Werkzeuge mit gleichen Referenzen wie die Hauptwerkzeuge, die dann zum Einsatz kommen, wenn die Hauptwerkzeuge defekt sind oder durch die Werkzeugbruch- oder Standzeitüberwachung gesperrt werden.

Beim dargestellten Ausführungsbeispiel besteht die Werkzeughandhabungsvorrichtung im Wesentlichen aus drei konzentrischen Halteringen 10 - 12, die in einer Ebene, beispielsweise in einer horizontalen Ebene, angeordnet sind und mit einer Vielzahl von Werkzeughaltern 13 bestückt sind. Diese Werkzeughalter 13 sind beispielsweise elastische oder federnde Greifer, in die ein Werkzeug 14 zum Fixieren seitlich eingeschoben wird. Der mittlere Haltering 11 ist beidseitig mit Werkzeughaltern 13 bestückt, während der innere Haltering 10 nur an seiner radial äußeren Seite und der äußere Haltering 12 nur an seiner radial inneren Seite mit Werkzeughaltern 13 bestückt ist. Zur Vereinfachung sind nur einzelne Werkzeughalter 13 dargestellt, wobei strichpunktiert Linien 15 die übrigen, ringförmig angeordneten Werkzeughalter darstellen sollen.

Am äußeren Haltering 12 ist eine Be- und Entladestation 16 für Werkzeuge 14 angeordnet. Diese besteht aus einer Anzahl (im Ausführungsbeispiel sechs) von an der radial äußeren Seite des Halterings 12 angeordneten Werkzeughaltern 13, wobei dieser äußere Haltering 12 im Bereich dieser Be- und Entladestation 16 eine Unterbrechung aufweist, die als Verfahrgasse 17 verwendet wird. Eine zweite Verfahrgasse 18 besteht aus radial fluchtenden Unterbrechungen der Halteringe 11 und 12 an einer anderen Stelle. Die Funktion der Verfahrgassen 17, 18 wird später noch näher erläutert. Die Zahl der Verfahrgassen kann prinzipiell auch noch größer sein, wobei in einer einfacheren Ausführung auf die Verfahrgasse 17 auch verzichtet werden könnte.

Ein Ausleger 19 ist um eine im Mittelpunkt der Halteringe 10 - 12 angeordnete zentrale Schwenkachse 20 schwenkbar bzw. drehbar gelagert, wobei die Schwenkebene dieses Auslegers 19 parallel versetzt zur Ebene der Werkzeughalter 13 angeordnet ist. Zum Drehantrieb des Auslegers 19 dient ein als Stellmotor ausgebildeter Antriebsmotor 21. Der Ausleger 19 selbst ist teleskopartig verlängerbar, wobei an einem radial äußeren Auslegerelement 22 an der zur Ebene der Werkzeughalter 13 hin weisenden Seite ein Werkzeuggreifer 23 angeordnet ist. Zum teleskopartigen Aus- und Einfahren des Auslegers 19 dient ein nicht näher dargestellter Stellantrieb, beispielsweise ein elektrischer, pneumatischer oder hydraulischer Stellantrieb. Zur Übertragung von Sensor- und/oder Steuersignalen bzw. Spannungen vom ortsfesten Bereich der Werkzeughandhabungsvorrichtung, an der die Werkzeughalter 13 angeordnet sind, zum Ausleger 19 dient eine Schleifringübertragungseinrichtung 24, so dass beliebig viele Drehbewegungen des Auslegers 19 möglich sind. Die Übertragung von Fluid für eventuell im Ausleger 19 angeordnete fluidische Antriebe erfolgt in nicht näher dargestellter Weise über die dann als Hohlwelle ausgebildete Antriebswelle 25 für den Ausleger 19.

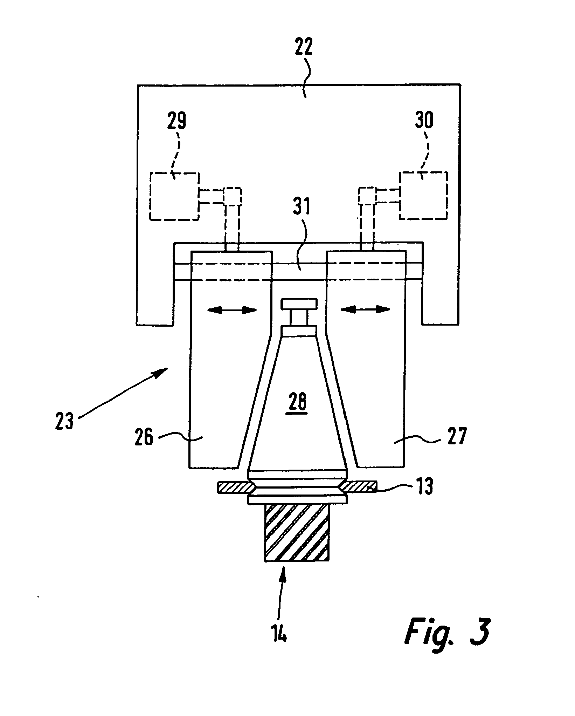

Der Werkzeuggreifer 23 ist in Fig. 3 näher dargestellt. Er besteht im Wesentlichen aus zwei gegeneinander und auseinander bewegbaren Greifbacken 26, 27, die entsprechend dem Haltebereich 28 eines Werkzeugs 14 geformt sind, so dass sie diesen Haltebereich 28 zwischen sich zur Fixierung einklemmen können. Zur gegensinnigen Bewegung der Greifbacken 26, 27 dienen im Ausführungsbeispiel zwei Stellzylinder 29, 30. Alternativ hierzu kann auch ein einziger doppeltwirkender Stellzylinder oder eine andere Stellgliedanordnung vorgesehen sein. Die Greifbacken 26, 27 sind dabei entlang wenigstens eines Führungsglieds 31 bewegbar bzw. verschiebbar.

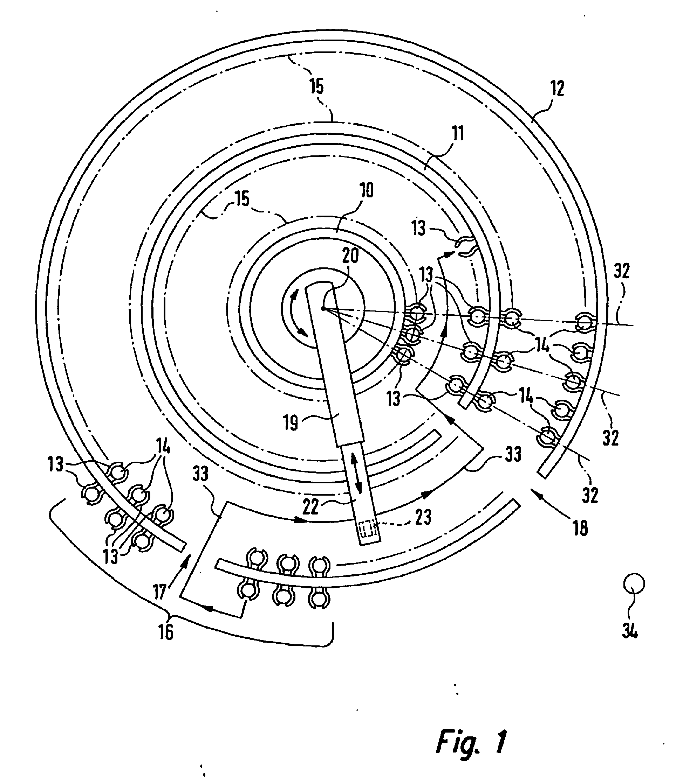

Der Abstand zwischen der Ebene der Werkzeughalter und der Bewegungsebene des Auslegers 19 ist so bemessen, dass beim radialen Überfahren eines Werkzeugs 14 durch den Werkzeuggreifer 23 der Haltebereich 28 des Werkzeugs 14 zwischen den Greifbacken 26, 27 zu liegen kommt. Diese können dann durch Gegeneinanderfahren das Werkzeug 14 ergreifen und durch eine weitere radiale Bewegung des Werkzeuggreifers 23 aus dem entsprechenden Werkzeughalter 13 herausziehen. Insbesondere aus Fig. 3 wird auch deutlich, dass der unbeladene Werkzeuggreifer 23 die Halteringe 11 und 12 auch außerhalb der Verfahrgassen 17, 18 überfahren kann. Durch strichpunktierte Linien 32 in Fig. 1 wird verdeutlicht, dass zumindest einige der an den verschiedenen Halteringen 10 - 12 angeordneten Werkzeughalter 13 radial fluchtend ausgerichtet sind, so dass solche fluchtende Werkzeughalter 13, die mit Werkzeugen bestückt sein können, radial in einer einzigen Bewegung des Werkzeuggreifers 23 überfahren werden können. Es ist auch möglich, nur Werkzeughalter 13 der Halteringe 11 und 12 fluchtend anzuordnen. Darüber hinaus können beispielsweise am äußeren Haltering 12, jedoch auch an anderen äußeren Halteringen zusätzliche Werkzeughalter 13 angeordnet sein, die nicht mit radial inneren Werkzeughaltern 13 fluchten. Dies dient zur besseren Platzausnutzung.

An der Be- und Entladestation 16 werden Werkzeuge beispielsweise manuell ausgewechselt, das heißt, nicht mehr benötigte Werkzeuge entnommen und neue Werkzeuge eingesetzt. Diese Werkzeuge werden dann durch entsprechende Bewegungen des Auslegers 19 zu inneren Werkzeughaltern 13 geführt. Ein derartiger Verfahrweg ist beispielhaft durch eine Linie 33 dargestellt. Der mit einem Werkzeug beladene Werkzeuggreifer 23 kann die Halteringe 11 und 12 nicht mehr überfahren, so dass zur Überführung die Verfahrgassen 17, 18 erforderlich sind. Die gesamte Werkzeughandhabungsvorrichtung besitzt üblicherweise eine nicht dargestellte Abdeckung, die lediglich im Bereich der Be- und Entladestation 16 eine Öffnung oder einen aufschwenkbaren Bereich besitzt.

Der Zweck der Werkzeughandhabungsvorrichtung besteht wesentlich darin, enthaltene Werkzeuge an eine externe Übergabeposition bzw. Übergabestation 34 zu überführen und Werkzeuge von dieser Übergabestation 34 in die Werkzeughandhabungsvorrichtung zurückzuführen. Diese Übergabestation 34 ist beispielsweise im Falle des Einsatzes als Magazinplatzerweiterung eine Übergabestation in einem Hauptmagazin und im Falle des Einsatzes als Hauptmagazin die Übergabestation beispielsweise zu einer Werkzeugspindel hin. Die Übergabestation 34 fluchtet dabei vorzugsweise mit der Verfahrgasse 18, so dass Werkzeuge von der Übergabestation 34 und zu dieser hin durch die Verfahrgasse 18 über eine einzige Linearbewegung verfahren werden können.

Gemäß dem dargestellten Ausführungsbeispiel können in Werkzeughaltern 13 abgelegte Werkzeuge durch eine radiale Hubbewegung des Auslegers 19 durch den unbeladenen Werkzeuggreifer 23 überfahren werden. Die Greifbacken 26, 27, des Werkzeuggreifers 23 können jedoch auch um 90° gedreht angeordnet sein, so dass die in Werkzeughaltern 13 gehaltenen Werkzeuge durch den Werkzeuggreifer 23 bei einer Schwenkbewegung des Auslegers 19 überfahren werden können.

Anstelle der teleskopartigen Hubbewegung des Auslegers 19 kann der Werkzeuggreifer 23 auch radial verschiebbar an einem starren Ausleger 19 oder an einem weniger Teleskopelemente aufweisenden Ausleger 19 angeordnet sein.

Um einen sicheren Transport von Werkzeugen 14 im Werkzeuggreifer 23 sicherzustellen, können End- bzw. Näherungsschalter vorgesehen sein, durch die bei geschlossenen Greifbacken 26, 27 der genaue Sitz des Werkzeugs im Werkzeuggreifer 23 kontrolliert werden kann.

Anstelle eines einzelnen Werkzeuggreifers 23 mit zwei Greifbacken 26, 27 kann auch ein sogenannter Doppelgreifer vorgesehen sein, also eine Anordnung von zwei Werkzeuggreifern 23, so dass beispielsweise ein nicht mehr benötigtes Werkzeug von der Werkzeugspindel oder allgemein von der Übergabestation 34 entnommen und danach unmittelbar ein neues Werkzeug dort übergeben werden kann, ohne dass eine Rückfahrbewegung zu einem Werkzeughalter 13 erforderlich wäre. Ein solcher Doppelgreifer kann auch schwenkbar ausgebildet sein.

Anstelle der Anordnung der Werkzeughalter 13 in konzentrischen Ringen um die Schwenkachse 20 herum können prinzipiell auch andere Anordnungen von Werkzeughaltern treten, beispielsweise lineare Reihenanordnungen, Vieleckanordnungen, ovale Anordnungen und dergleichen. Auch derartige Reihenanordnungen können um die Schwenkachse herum angeordnet werden, beispielsweise auch ineinander gestaffelt. Bewegt sich der beladene Werkzeuggreifer 23 entlang oder zwischen derartigen, nicht ringförmigen Reihenanordnungen, so muß gleichzeitig eine entsprechende kombinierte Schwenk- und Hubbewegung des Auslegers 19 stattfinden. Für Anwendungen einer Werkzeughandhabungsvorrichtung an Orten mit besonderer Geometrie können solche Sonderformen und Anordnungen der Werkzeughalter von Vorteil sein. Ein Überfahren von derart angeordneten Werkzeughaltern 13 durch den unbeladenen Werkzeuggreifer 23 ist entsprechend der ringförmigen Anordnung von Werkzeuggreifern möglich, sofern die Werkzeuggreifer entsprechend radial ausgerichtet sind, um ein Überfahren durch eine einzige Hubbewegung des Auslegers ohne Schwenkbewegung realisieren zu können.

Die spezielle Funktion mancher Werkzeughalter 13 kann es erforderlich machen, diese auch bei nicht konzentrischen Anordnungen zur zentralen Schwenkachse 20 hin auszurichten.

## Patentansprüche

1. Werkzeughandhabungsvorrichtung für eine Werkzeugmaschine, mit einer Vielzahl von in einer Ebene angeordneten Werkzeughaltern (13),und mit einem um eine senkrecht zu dieser Ebene angeordnete Schwenkachse (20) schwenkbaren Ausleger (19), der eine senkrecht zur Schwenkachse (20) in radialer Richtung bewegbare Werkzeuggreiferanordnung (23) trägt, durch die Werkzeuge (14) zwischen einer Übergabestation (34) und den Werkzeughaltern (13) verfahrbar sind, **dadurch gekennzeichnet, dass** die Werkzeughalter (13) stationär in einer Ebene angeordnet sind, und dass die Werkzeuggreiferanordnung (23) in ihrer unbeladenen Offenstellung zum Überfahren von in den Werkzeughaltern (13) gehaltenen Werkzeugen (14) ausgebildet ist.

2. Werkzeughandhabungsvorrichtung nach Anspruch 1, **dadurch gekennzeichnet, dass** die Bewegungsebene der Werkzeuggreiferanordnung (23) parallel zur Ebene der Werkzeughalter (13) angeordnet ist, wobei jeweils der zu dieser Bewegungsebene hin gerichtete Haltebereich (28) der in den Werkzeughaltern (13) gehaltenen Werkzeuge (14) bei entsprechender Positionierung der Werkzeuggreiferanordnung (23) in deren Ebene zwischen die Greifbacken (26, 27) zu liegen kommt.

3. Werkzeughandhabungsvorrichtung nach Anspruch 1 oder 2, **dadurch gekennzeichnet, dasss** die Werkzeughalter (13) in wenigstens einer Reihe, insbesondere in konzentrischen Ringen, um die Schwenkachse (20) herum angeordnet sind.

4. Werkzeughandhabungsvorrichtung nach Anspruch 3, **dadurch gekennzeichnet, dass** wenigstens ein Teil der Werkzeughalter (13) der verschiedenen Ringe jeweils in radialer Richtung fluchtend ausgebildet ist.

5. Werkzeughandhabungsvorrichtung nach einem der vorhergehenden Ansprüche, **dadurch gekennzeichnet, dass** wenigstens eine radiale Verfahrgasse (18, 17) zum radialen Verfahren der beladenen Werkzeuggreiferanordnung (23) freigelassen ist.

6. Werkzeughandhabungsvorrichtung nach einem der vorhergehenden Ansprüche, **dadurch gekennzeichnet, dass** Halteringe (10 - 12) für die Werkzeughalter (13) vorgesehen sind, wobei innere Halteringe (11) vorzugsweise beidseitig mit Werkzeughaltern (13) versehen sind.

7. Werkzeughandhabungsvorrichtung nach Anspruch 6, **dadurch gekennzeichnet, dass** am oder im Bereich des äußeren Halterings (12) eine insbesondere manuelle Be- und Entladestation (16) für Werkzeuge (14) vorgesehen ist.

8. Werkzeughandhabungsvorrichtung nach Anspruch 7, **dadurch gekennzeichnet, dass** im Bereich der Be- und Entladestation (16) an der radial nach außen weisenden Seite des äußeren Halterings (12) mehrere Werkzeughalter (13) und vorzugsweise eine wenigstens den äußeren Haltering (12) durchquerende Verfahrgasse (17) angeordnet sind.

9. Werkzeughandhabungsvorrichtung nach einem der Ansprüche 6 bis 8, **dadurch gekennzeichnet, dass** der radiale Abstand der Halteringe (10 - 12) jeweils so bemessen ist, dass eine Schwenkbewegung der beladenen Werkzeuggreiferanordnung (23) dazwischen möglich ist.

10. Werkzeughandhabungsvorrichtung nach einem der vorhergehenden Ansprüche, **dadurch gekennzeichnet, dass** der Ausleger (19) teleskopartig in seiner Länge veränderbar ist und vorzugsweise an seinem freien Ende die Werkzeuggreiferanordnung (23) trägt.

11. Werkzeughandhabungsvorrichtung nach einem der vorhergehenden Ansprüche, **dadurch gekennzeichnet, dass** die Greifbewegung der Greifbacken (26, 27) der Werkzeuggreiferanordnung (23) und/oder die Radialbewegung der Werkzeuggreiferanordnung (23) pneumatisch, hydraulisch oder elektrisch erfolgt.

12. Werkzeughandhabungsvorrichtung nach einem der vorhergehenden Ansprüche, **dadurch gekennzeichnet, dass** eine Schleifringübertragungsanordnung (24) zur Übertragung von elektrischen Signalen und/oder von elektrischer Versorgungsenergie auf den Ausleger (19) vorgesehen ist.

13. Werkzeughandhabungsvorrichtung nach einem der vorhergehenden Ansprüche, **dadurch gekennzeichnet, dass** die Werkzeuggreiferanordnung (23) ein Greifbackenpaar oder zwei Greifbackenpaare besitzt.

14. Werkzeughandhabungsvorrichtung nach einem der vorhergehenden Ansprüche, **gekennzeichnet durch** die Ausbildung als Werkzeugmagazin oder Magazinplatzerweiterung für ein Werkzeugmagazin einer Werkzeugmaschine, insbesondere als in der Werkzeugmaschine integriertes Werkzeugmagazin.

## Claims

1. Tool handling device for a machine tool, with a plurality of toolholders (13) arranged in a plane and with an arm (19) pivotable about a pivot axis (20) extending at right angles to said plane and supporting a tool gripper arrangement (23) movable in the radial direction at right angles to the pivot axis (20), by means of which the tools (14) can be transported between a transfer station (34) and the toolholders (13), **characterised in that** the toolholders (13) are arranged stationary in one plane, and **in that** the tool gripper arrangement (23) is in its unloaded open position designed for passing over tools (14) held in the toolholders (13).

2. Tool handling device according to claim 1, **characterised in that** the plane of movement of the tool gripper arrangement (23) is arranged parallel to the plane of the toolholders (13), wherein the holding region (28) of the tools (14) held in the toolholders (13), which is oriented towards this plane of movement, comes to lie between the gripping jaws (26, 27) in the plane of movement of the tool gripper arrangement (23) if the latter is positioned accordingly.

3. Tool handling device according to claim 1 or 2, **characterised in that** the toolholders (13) are arranged in at least one row, in particular in concentric rings, around the pivot axis (20).

4. Tool handling device according to claim 3, **characterised in that** at least a part of the toolholders (13) of the various rings is aligned in the radial direction.

5. Tool handling device according to any of the preceding claims, **characterised in that** at least one radial traversing path (18, 17) is left free for the radial traversing of the loaded tool gripper arrangement (23).

6. Tool handling device according to any of the preceding claims, **characterised in that** retaining rings (10 - 12) are provided for the toolholders (13), inner retaining rings (11) being preferably provided with toolholders (13) on both sides.

7. Tool handling device according to claim 6, **characterised in that** an in particular manual loading and unloading station (16) for tools (14) is provided at or in the region of the outer retaining rings (12).

8. Tool handling device according to claim 7, **characterised in that** a plurality of toolholders (13) and preferably at least one traversing path (17) passing through at least the outer retaining ring (12) are provided in the region of the loading and unloading station (16) on the side of the outer retaining ring (12) which faces radially outwards.

9. Tool handling device according to any of claims 6 to 8, **characterised in that** the radial spacing of the retaining rings (10 - 12) is dimensioned such that a pivoting movement of the loaded tool gripper arrangement (23) is possible in between.

10. Tool handling device according to any of the preceding claims, **characterised in that** the length of the arm (19) can be changed telescopically, its free end preferably supporting the tool gripper arrangement (23).

11. Tool handling device according to any of the preceding claims, **characterised in that** the gripping movement of the gripping jaws (26, 27) of the tool gripper arrangement (23) and/or the radial movement of the tool gripper arrangement (23) is/are controlled pneumatically, hydraulically or electrically.

12. Tool handling device according to any of the preceding claims, **characterised in that** a slip ring transmission arrangement (24) is provided for the transmission of electric signals and/or electric supply energy to the arm (19).

13. Tool handling device according to any of the preceding claims, **characterised in that** the tool gripper arrangement (23) comprises one pair of gripping jaws or two pairs of gripping jaws.

14. Tool handling device according to any of the preceding claims, **characterised by** a design as a tool magazine or a magazine location extension for a tool magazine of a machine tool, in particular as a tool magazine integrated into the machine tool.

## Revendications

1. Système de gestion d'outils pour une machine-outil, avec une pluralité de supports d'outil (13) placés dans un plan et avec un bras (19) pouvant pivoter autour d'un axe de pivotement (20) situé dans ce plan, bras qui porte un système de préhension d'outil (23) mobile dans la direction radiale perpendiculairement à l'axe de pivotement (20), système grâce auquel les outils (14) peuvent être déplacés entre un poste de transfert (34) et les supports d'outil (13), **caractérisé en ce que** les supports d'outil (13) sont placés stationnaires dans un plan et **en ce que** le système de préhension de pièce (23) dans sa position ouverte non chargée est conformé pour transférer des outils (14) tenus dans les supports d'outil (13).

2. Système de gestion d'outils selon la revendication 1, **caractérisé en ce que** le plan de déplacement du système de préhension d'outil (23) est placé parallèlement au plan du support d'outil (13), la zone d'arrêt (28) des outils (14) tenus dans les supports d'outil (13) tournée vers ce plan de déplacement venant se placer à chaque fois, avec un positionnement correspondant du système de préhension d'outil (23), dans son plan entre les mors de préhension (26, 27).

3. Système de gestion d'outils selon la revendication 1 ou 2, **caractérisé en ce que** les supports d'outil (13) sont disposés autour de l'axe de pivotement (20) en au moins une rangée, en particulier en anneaux concentriques.

4. Système de gestion d'outils selon la revendication 3, **caractérisé en ce qu'**au moins une partie des supports d'outil (13) des différents anneaux est réalisée à chaque fois alignée dans la direction radiale.

5. Système de gestion d'outils selon l'une des revendications précédentes, **caractérisé en ce qu'**au moins une piste de déplacement radiale (18, 17) est laissée libre pour le déplacement radial du système de préhension d'outil (23) chargé.

6. Système de gestion d'outils selon l'une des revendications précédentes, **caractérisé en ce que** des bagues de maintien (10 - 12) sont prévues pour les supports d'outil (13), des bagues de maintien intérieures (11) étant munies de supports d'outil (13) de préférence des deux côtés.

7. Système de gestion d'outils selon l'une des revendications précédentes, **caractérisé en ce que** sur ou au niveau de la bague de maintien extérieure (12) est prévu un poste de chargement et déchargement (16), en particulier manuel, pour des outils (14).

8. Système de gestion d'outils selon la revendication 7, **caractérisé en ce qu'**au niveau du poste de chargement et déchargement (16), sur le côté de la bague de maintien extérieure (12) tourné radialement vers l'extérieur, sont placés plusieurs supports d'outil (13) et de préférence une piste de déplacement (17) traversant au moins la bague de maintien extérieure (12).

9. Système de gestion d'outils selon l'une des revendications 6 à 8, **caractérisé en ce que** la distance radiale entre les bagues de maintien (10 - 12) est choisie en sorte qu'un mouvement de pivotement du système de préhension d'outil (23) chargé soit possible entre elles.

10. Système de gestion d'outils selon l'une des revendications précédentes, **caractérisé en ce que** le bras (19) peut changer de longueur de manière télescopique et porte de préférence à son extrémité libre le système de préhension d'outil.

11. Système de gestion d'outils selon l'une des revendications précédentes, **caractérisé en ce que** le mouvement de préhension des mors de préhension (26, 27) du système de préhension d'outil (23) et/ou le mouvement radial du système de préhension d'outil (23) s'effectue de manière pneumatique, hydraulique ou électrique.

12. Système de gestion d'outils selon l'une des revendications précédentes, **caractérisé en ce qu'**un système de transmission à bague frottante (24) est prévu pour transmettre des signaux électriques et/ou de l'énergie d'alimentation électrique au bras (19).

13. Système de gestion d'outils selon l'une des revendications précédentes, **caractérisé en ce que** le système de préhension d'outil (23) possède une paire de mors de préhension ou deux paires de mors de préhension.

14. Système de gestion d'outils selon l'une des revendications précédentes, **caractérisé par** une conformation comme magasin d'outils ou extension de magasin pour un magasin d'outils d'une machine-outil, en particulier comme magasin d'outils intégré à la machine-outil.
